# EUROPEAN PATENT APPLICATION

(11) **EP 2 080 553 A1**
(43) Date of publication of application: **22.07.2009**
(21) Application number: 08000932.7
(22) Date of filing: 18.01.2008
(51) Int. Cl.: B01L 3/00, B01L 3/14, B01L 9/06

(54) **A method and system to localise and identify at least one of a plurarility of test tubes**

(71) Applicant: F. Hoffmann-La Roche AG, 4070 Basel (CH); Roche Diagnostics GmbH, 68305 Mannheim (DE)
(72) Inventor: Trüeb, Heinz, 6280 Hochdorf (CH); Birrer, Armin, 6036 Dierikon (CH); Brauner, Thomas, 8055 Zürich (CH)
(74) Representative: Hössle Kudlek & Partner

(57) **Abstract**

A method and system to localise and to identify at least one of a plurality of test tubes (24) in a test tube rack (22, 23), each test tube (24) being provided with a barcode label containing test tube identification data, the method comprising the steps of
- scanning the barcode label of the at least one test tube (24) by means of a barcode scanner (32) in order to retrieve identification data of the corresponding test tube (24) and to determine the location of the corresponding test tube (24);
- in case the corresponding test tube (24) additionally comprises an RFID assembly (14), reading additional test tube data stored in the RFID assembly (14) ; and
- correlating the identification data, the location and the additional test tube data.

## Description

### Technical Field

The present invention relates to the identification of test tubes in a test tube rack using RFID technology. The present invention particularly relates to a method and a system to localise and to identify at least one of a plurality of test tubes in a test tube rack. The present invention further relates to the identification of test tubes being provided with a barcode label containing test tube identification data and further comprising an RFID assembly.

### Description of the Related Art

Analyser devices are important work tools and systems in laboratory analytics in the clinical area, chemical and pharmaceutical area, in immunology etc. Modern analyser devices are conceived in a modular manner and provide for fully automated laboratory work. Different modules relate to different fields of analytics, using for example dispenser technology or pipette technology. Reagents and specimens used in the analytical work are usually provided in individual containers such as test tubes, wherein one or more reagent containers are placed in a reagent container carrier structure. Reagent container carrier structures are well-known in this field of technology under various terms such as racks, cassettes, cartridges etc. For ease of reference, all these holding devices will be referred to as test tube racks or just racks throughout this application. Further, the term test tube will be used as synonym for any kind of suitable container.

In the course of the analysing process, one or more test tube racks holding each at least one test tube are placed in a respective analyser device. In order for the analyser device to be able to treat the inserted carrier structure properly, i.e. identifying its content etc., each test tube usually comprises a barcode label on its outer surface. The analyser device in turn comprises a barcode reader installed in such a manner that the barcode information contained on the label of the test tube can be read and transferred to a computing and control unit of the analyser device.

With the advent of RFID technology in laboratory work, particularly for identification of reagent work probes, RFID assemblies on test tubes and other reagent containers have become more and more widespread.

US 2002/0076819 A1 discloses a diagnostic specimen container comprising a biomedical specimen collection vessel and a wireless electronic memory tag for non-contact storage and retrieval of information, and also having barcode labels imprinted with identifying barcodes on it. The known labels and tags are used in the management of diagnostic and/or toxicology specimens from multiple specimen collection sites, such as hospitals, and the delivery of the collected specimens to a reference laboratory. The electronic specimen identification code and identifying barcode for each encoded specimen container are correlated and the correlated codes are stored on a central computer database. The encoded specimen containers are then supplied to multiple specimen collection sites and are used to collect specimens from specimen donors at these sites. After gathering data about the collected specimens, specimen donors, and prescribed specimen tests at the specimen collection sites, the data is correlated with the identifying barcodes on the corresponding specimen containers and entered into the collection site computer record. The use of both, barcode data and electronic data, allows each site to use the reading technology available at this site, with the barcode being an established and widespread method of identification at the specimen collection sites. Due to the correlation of each electronic identification code and corresponding barcode in a central computer database, sites without RFID readers/scanners but with connection to the central computer database can also retrieve the electronic data.

### Summary

In contrast thereto, the present invention provides a method to localise and to identify at least one of a plurality of test tubes in a test tube rack comprising the features of claim 1, as well as a system to localise and identify at least one of a plurality of test tubes in a test tube rack comprising the features of claim 9.

According to the invention, at least one of a plurality of test tubes in a test tube rack is localised and identified by scanning the barcode label of the at least one test tube in order to retrieve identification data of the corresponding test tube and to determine the location of the corresponding test tube. The identification data retrieved from the barcode label allows determining whether the corresponding test tube additionally comprises an RFID assembly. In case the corresponding test tube additionally comprises an RFID assembly, the additional test tube data stored in the RFID assembly is read, and the identification data of the barcode label, the location of the test tube and the additional test tube data from the RFID assembly are correlated. The step of reading the additional test tube data stored in the RFID assembly may but does not have to be triggered by the result of the scanning of the bar code label. The combined use of a barcode label and an RFID assembly according to the invention thus allows to not only precisely localise and identify a given test tube within a test tube rack but also to retrieve and write additional test tube data from and to, respectively, the test tube. The use of a barcode label alone would not enable a more extensive data handling, and the use of RFID labels or tags alone would not enable to precisely localise a test tube within the test tube rack.

The present description also covers a computer program with program coding means which are suitable for carrying out a process according to the invention as described above when the computer program is run on a computing device, e.g. a computing device of an analyser device. The computer program itself as well as stored on a computer-readable medium is claimed.

Further features and embodiments will become apparent from the description and the accompanying drawings.

It will be understood that the features mentioned above and those described hereinafter can be used not only in the combination specified but also in other combinations or on their own, without departing from the scope of the present disclosure. Particularly, the sequence of steps as defined in the claims can be altered without leaving the scope of the invention.

Various implementations are schematically illustrated in the drawings and are hereinafter explained in detail with reference to the drawings. It is understood that both the foregoing general description and the following description of various embodiments are exemplary and explanatory only and are not meant to be restrictive or to be read into the claims. The accompanying drawings, which are incorporated in an constitutive part of this specification, illustrate some embodiments, and together with the description serve to explain the principles of the embodiments described herein.

### Brief Description of the Drawings

Figure 1 shows the back surface of an embodiment of a combined bar code and RFID assembly label for use in the present invention.

Figure 2 shows in highly schematic manner an exemplary embodiment of the design of a test tube identification and localisation system according to the invention comprising an RFID communication device and a bar code reader device.

Figure 3 shows an alternative embodiment of the system of Figure 2.

Figure 4 shows, in a general view, an embodiment of an analyser device incorporating a test tube identification and localisation system according to the invention.

Figure 5 shows an embodiment of a test tube rack for use in a system according to the invention.

### Detailed Description

Reference will now be made in detail to some embodiments, examples of which are illustrated in the accompanying drawings. Wherever possible, the same reference numbers are used throughout the drawings to refer to the same or like parts.

Radio Frequency Identification (RFID) provides a convenient mechanism for identifying and detecting objects using wireless electromagnetic signals. A basic RFID system has at least one RFID reader and at least one RFID assembly (the latter also known by the term "transponder" or "RFID tag"). Typically, RFID readers can include a coil or antenna and circuitry to transmit and receive signals with the coil or antenna. An RFID assembly or tag or transponder also includes a coil or antenna and some information stored on an RFID chip that can be read by an RFID reader.

The RFID reader antenna generates an electromagnetic field, thereby transferring energy to the tag. Depending on the design of the tag, a portion of the energy transferred to the tag will be reflected to the reader so as to provide information about the tag back to the reader. Some RFID systems can be used to read and optionally write data to and from the RFID tag. RFID readers can generate signals spanning distances from less than one centimetre to more than fifty metres depending on frequency and power of the signals generated at the RFID reader antenna.

Typically, RFID assemblies or tags are categorised as either active or passive. Active RFID tags are powered by an internal battery and are typically read/write, i.e. tag data can be rewritten and/or modified. An active tag's memory size varies according to application requirements, some systems operating with up to 1 MB of memory and more. Passive RFID tags operate without a separate external power source and obtain operating power generated from the reader. Passive tags are consequently typically lighter than active tags, less expensive, and offer a long operational lifetime. Passive tags typically have shorter read ranges than active tags and require a higher-powered reader. Read-only tags are typically passive and can be programmed with a unique set of data (usually 32 to 128 bits) that is typically predetermined at the time of manufacture of the tag. It is understood that passive read/write tags can also be employed consistent with the present teachings.

Consequently, the term "RFID assembly" or "RFID tag", respectively, as used herein refers to either an active or passive RFID tag that contains information. The RFID tag can be read only or read/write and the information associated with the RFID tag can be hard-coded into the RFID tag at the time of manufacture or at some later time, all the RFID tag can contain information that is written to the RFID tag throughout its lifetime.

The term "RFID reader" as used herein includes devices that can read information from and/or write information into an RFID tag.

The term "information" as used herein refers to data that can be stored electronically in the RFID tag and can be retrieved to be used as machine readable or human readable data for processing the reagent or specimen and/or test tube and/or test tube rack and/or can be written to the RFID tag before, during or after processing. It covers but is not restricted to such information as type of reagent, specimen, lot size, donor, production or donation date, production or donation place, application data, system type suitability, use-by date, set point, control point, calibration data, analyser device log data, date of first opening, used in which device, sampling data, carrier structure control data, etc.

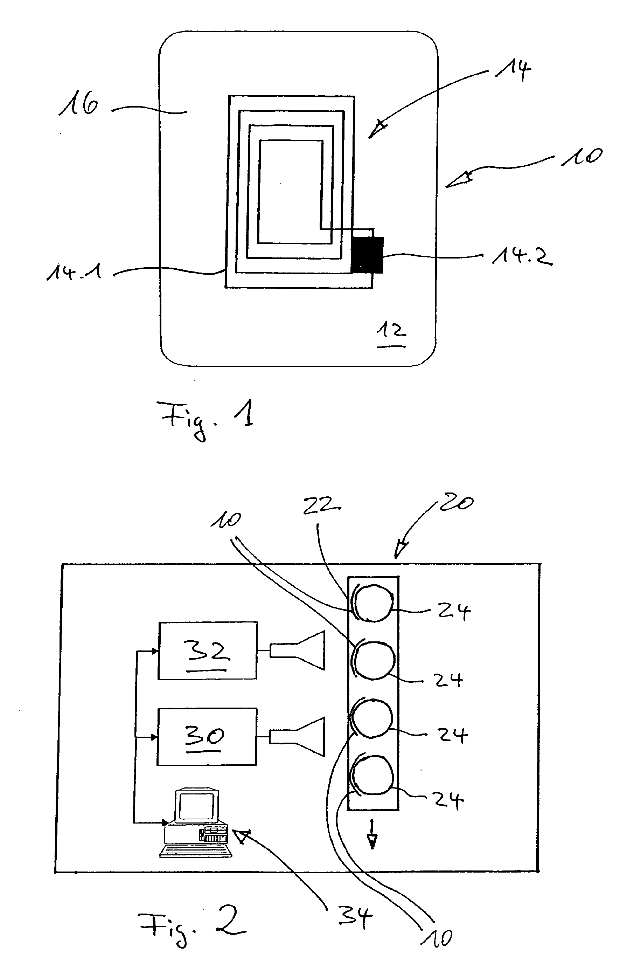

Figure 1 shows a back surface 12 of a label 10 for use in the present invention. The label 10 is a combined label comprising a bar code printing (not shown) on a front side of the label and an RFID assembly 14 positioned on the back surface 12 of the label 10 as can be seen from the highly schematic illustration of Figure 1. The RFID assembly as such is well-known in the art and is also known as a "transponder" or "RFID tag". The RFID assembly 14 comprises an antenna or coil 14.1 and an RFID chip 14.2. The antenna 14.1 is the coupling element for establishing a communication contact with an appropriate RFID reader or RFID communication device as explained in more detail below.

A label of the kind illustrated in Figure 1 and described above is basically known from the prior art, such as for example from US 2002/0076819 A1. The application of the label 10 to a test tube can be performed by any known means, for example by means of an adhesive layer 16 applied to the back surface 12 of the label 10. However, it is also possible and within the scope of this invention to apply the bar code, on the one side, and the RFID assembly, on the other side, separately from each other to a test tube. For example, it might be possible to attach the RFID assembly to the bottom of a test tube and to attach the corresponding bar code to a side surface of the same test tube.

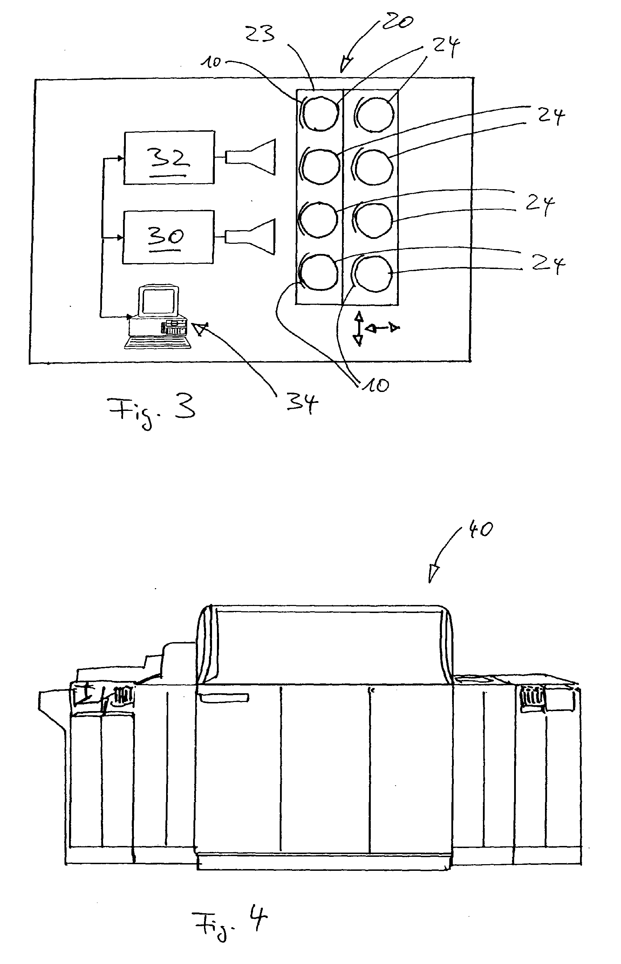

Figure 2 shows a schematic view how a system 20 to localise and identify at least one of a plurality of test tubes in a test tube rack is built up. The system 20 comprises an RFID communication device 30 and a bar code reader 32. The system 20 also comprises a computing device 34 which can be positioned separately from the system (stand alone computer), or can be fully or partly integrated into the system. The localisation and identification system again can be part of a laboratory analyser device 40 as shown in Figure 4. The computing device 34 can also serve as controlling unit for the system 20 or analyser device 40, respectively.

Test tubes 24 are inserted into the system 20. The test tubes 24 are placed in a test tube rack 22. The test tube rack 22 might be a single-row test tube rack as illustrated in Figure 2, a multi-row rack 23 (matrix) as illustrated in the embodiment of Figure 3, a plurality of single-row test tube racks or a plurality of multi-row racks.

The test tube rack 22 or 23 is inserted into the system 20 with the test tubes placed therein. Each test tube comprises a bar code attached on any suitable surface of the test tube. The barcode label of each test tube 24 is scanned by the bar code scanner or reader 32 in order to retrieve identification data of the corresponding test tube and also to determine the location of the corresponding test tube. The signals read by the bar code reader 32 are transmitted to the computing device 34, and the computing device 34 evaluates these signals. Particularly, the computing device 34 determines the position of the test tube whose bar code is being read. This can be done by means known to the person skilled in the art, such as computing the position on the basis of the relative coordinates between the bar code reader and the test tube or the test tube rack, respectively. The coordinates are determined, for example, by means of suitable position sensors (not shown). In case the system 20 comprises a conveyor (not shown) in which the test tube rack is placed, the relative position of the rack to the bar code reader can be determined by an actuator or servo positioner of the conveyor. Movement of the conveyor is indicated by an arrow in Figure 2. In case of a multi-row rack, there can be a need for two-dimensional movement of the conveyor which is indicated by double arrows in Figure 3.

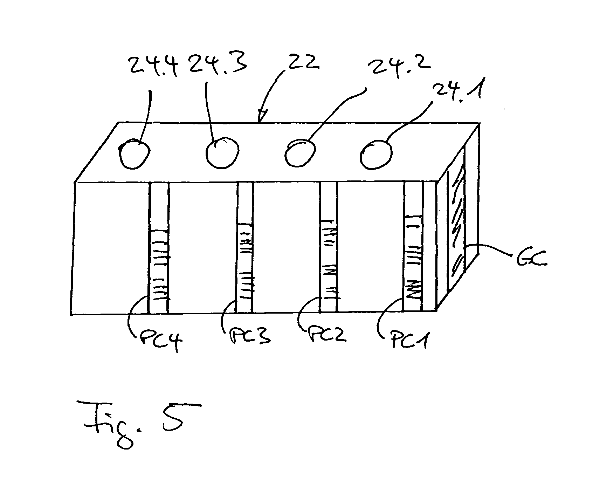

Alternatively or additionally, the rack may comprise position bar codes applied thereon, e.g. alternating with the test (sample) tubes. Such an embodiment is shown in Figure 5. For example, the position bar codes can be consecutively numbered, resulting in a sequence: position bar code PC1 - sample 24.1 - position bar code PC2 - sample 24.2 - position bar code PC3 - sample 24.3 etc. This enables a user to insert the rack manually into the analyser and/or move the rack manually back and forth. The position bar codes between the respective tubes ensure that the order of the respective samples can be observed during the measurement. In addition, the rack may or may not comprise a further barcode label, namely a rack barcode label GC containing general code for identifying the rack. Such general code may comprise, for example, access authorisation information, manufacturer information, general product information, and the like.

The bar code scanning of a single row rack (cf. Figure 2) is performed by means of a relative movement of the bar code scanner relative to the tubes in the single row of the rack, i.e. a movement of the bar code scanner and/or a movement of the rack. In case of a multi-row rack (cf. Figure 3), scanning of the bar codes can be facilitated by raising the test tubes in the rows behind the first row (i.e. the row next to the barcode scanner) to such an extent that no optical obstacle is between the scanner and the label to be scanned. This can be achieved, for example, by a ramp underneath the row to be scanned such as a wedge-form ramp.

Further, the computing device 34 determines, on the basis of the information read from the bar code label, whether the given test tube (which is being read) also comprises an RFID assembly 14. In case a combined label 10 as shown in Figure 1 is used on the test tubes 24, each test tube would comprise an RFID assembly. However, there might be test tubes placed in the test tube rack which do not have such a combined label thereon, in which case the computing device (which also controls the reading devices 30 and 32) would obtain an input whether an RFID assembly on a given test tube is available and to be read. Of course, scanning of the bar code labels and reading of the RFID assemblies can be performed independently from each other without leaving the scope of the present invention. Alternatively, the computing device may prompt the RFID communication device to read specific RFID assemblies.

In case the corresponding test tube 24 additionally comprises an RFID assembly 14, the additional test tube data stored in the RFID assembly 14 is read by the RFID communication device or RFID reader 30. The step of reading the additional test tube data is performed at one go for all test tubes in the rack or row by row for each row of the rack (wherein a row can be read at once or each tube sequentially. The retrieved and computed data, i.e. the identification data from the barcode, the location data as determined and the additional test tube data from the RFID tag, are correlated and stored in a database of the computing device for further processing in an analyser device connected to the system 20.

Figure 4 shows such an analyser device for analysing chemical, biological or pharmaceutical work probes. Such analyser devices are well-known in the art and are commonly used in modern automated laboratory work. They are, for example, commonly found in clinical laboratory work places. Examples for such analyser devices are the Elecsys^{®} and the Cobas^{®} systems from Roche Diagnostics, one of the applicants of the present invention.

Modern analyser devices comprise conveyor systems for conveying test tube racks placed into the analyser device. It is to be understood that the term "conveyor system" covers any system or assembly being able to convey or transport a test tube rack, such as rotational or linear conveyors, belt or chain conveyors, or robotic assemblies.

## Claims

1. A method to localise and to identify at least one of a plurality of test tubes (24) in a test tube rack (22, 23), each test tube (24) being provided with a barcode label containing test tube identification data, the method comprising the steps of
- scanning the barcode label of the at least one test tube (24) by means of a barcode scanner (32) in order to retrieve identification data of the corresponding test tube (24) and to determine the location of the corresponding test tube (24);
- in case the corresponding test tube (24) additionally comprises an RFID assembly (14), reading additional test tube data stored in the RFID assembly (14); and
- correlating the identification data, the location and the additional test tube data.

2. The method according to claim 1, further comprising the step of determining the location of the corresponding test tube (24) on the basis of the relative position between the given test tube (24) and the barcode scanner (32).

3. The method according to claim 1 or 2, further comprising the step of evaluating the identification data in order to determine whether the corresponding test tube (24) additionally comprises an RFID assembly (14).

4. The method of claim 3, wherein the step of evaluating is performed before the step of reading additional test tube data stored in the RFID assembly (14).

5. The method of claim 3, wherein the step of evaluating is performed during the step of correlating.

6. The method of claim 3, wherein the step of evaluating is performed before the step of correlating, but after the the step of reading additional test tube data stored in the RFID assembly (14).

7. The method according to any one of claims 1 to 6, wherein the test tube rack (22, 23) comprises a rack barcode label, the method further comprising the step of scanning the rack barcode label, the step of correlating including correlation of the rack barcode label data with at least one of the identification data, the location and the additional test tube data.

8. The method according to any one of claims 1 to 6, wherein the test tube rack (22, 23) comprises a rack barcode label, the method further comprising the step of scanning the rack barcode label, the step of evaluating further comprising evaluating of the rack barcode information and determining whether access of the rack is permitted or denied.

9. The method according to any one of claims 1 to 8, wherein the step of reading the additional test tube data is performed at one go for all test tubes in the rack.

10. The method according to any one of claims 1 to 8, wherein the step of reading the additional test tube data is performed row by row for each row of the rack.

11. The method according to claim 10, wherein the test tubes (24) in one row of the rack to be read are raised in order to facilitate bar code scanning.

12. The method according to any one of claims 1 to 11, wherein the barcode label and the RFID assembly (14) of one given test tube (24) each contain an identical identification code of the given test tube (24).

13. The method according to any one of claims 1 to 12, wherein each of the plurality of test tubes (24) comprises a barcode label and an RFID assembly (14).

14. The method according to any one of claims 1 to 13, wherein the RFID assembly (14) is included in the barcode label (10).

15. A system (20) to localise and identify at least one of a plurality of test tubes (24) in a test tube rack (22, 23), each test tube (24) being provided with a barcode label containing test tube identification data, the system further comprising
- a computing device (34);
- a barcode scanner (32) for scanning the barcode label of the at least one test tube (24) and determining the location of the at least one test tube (24);
- an RFID communication device (30) for communicating with an RFID assembly (14) provided on the at least one test tube (14) and for reading additional test tube data stored in the RFID assembly (14);
- the computing device (34) being set up and programmed to correlate the identification data, the location and the additional test tube data.

16. The system according to claim 15, wherein the computing device (34) is further set up and programmed to determine the location of a given test tube (24) on the basis of the relative position between the given test tube (24) and the barcode scanner (32).

17. The system according to claim 15 or 16, wherein the computing device (34) is further set up and programmed to evaluate whether the given test tube (24) comprises an RFID assembly (14) on the basis of the identification data retrieved by scanning the barcode label of the given test tube (24).

18. The system of claim 17, wherein the step of evaluating is performed before the step of reading additional test tube data stored in the RFID assembly (14).

19. The system of claim 17, wherein the step of evaluating is performed during the step of correlating.

20. The system of claim 17, wherein the step of evaluating is performed before the step of correlating, but after the step of reading additional test tube data stored in the RFID assembly (14).

21. The system according to any one of claims 16 to 20, wherein the test tube rack (22, 23) comprises a rack barcode label, the barcode scanner (32) being set up to scan the rack barcode label, and the computing device (34) being set up and programmed to correlate the rack barcode label data with at least one of the identification data, the location and the additional test tube data.

22. The system according to any one of claims 15 to 20, wherein the test tube rack (22, 23) comprises a rack barcode label, the barcode scanner (32) being set up to scan the rack barcode label, and the computing device (34) is set up to evaluate the rack barcode information and determine whether access of the rack is permitted or denied.

23. The system according to any one of claims 16 to 22, wherein the RFID communication device (30) is set up to read the plurality of test tubes (24) in the rack at one go.

24. The system according to any one of claim 16 to 22, wherein the RFID communication device (30) is set up to read the plurality of test tubes (24) in the rack (23) row by row for each row of the rack (23).

25. The system according to claim 24, wherein the test tubes (24) in one row of the rack to be read by the RFID communication device are raised in order to facilitate bar code scanning.

26. The system according to any one of claims 16 to 25, wherein the barcode label and the RFID assembly (14) of one given test tube (24) each contain an identical identification code of the given test tube (24).

27. The system according to any one of claims 16 to 25, wherein each of the plurality of test tubes (24) comprises a barcode label and an RFID assembly (14).

28. The system according to any one of claims 16 to 27, wherein the RFID assembly (14) is included in the barcode label (10).

29. The system according to any one of claims 16 to 28, wherein the system (20) is integrated in a laboratory analyser device (40) or a sample preparation device.

30. A computer program comprising computer program code which is suitable for carrying out a method according to any one of claims 1 to 15 when the computer program is run on a computing device, particularly on a computing device (34) of a system (20) according to any one of claims 16 to 29.

31. A computer program product with a computer program according to claim 30 stored thereon.

32. A computer readable medium with a computer program according to claim 30 stored thereon.
